# EUROPÄISCHE PATENTSCHRIFT

(11) **EP 0 958 968 B1**
(45) Veröffentlichungstag und Bekanntmachung des Hinweises auf die Patenterteilung: **17.12.2003**
(21) Anmeldenummer: 99107906.2
(22) Anmeldetag: 21.04.1999
(51) Int. Cl.: B60R 19/26

(54) **Stossfänger für ein Fahrzeug**
Bumper for a vehicle
Pare-chocs pour véhicule

(30) Priorität: 19.05.1998 DE 19822491
(43) Veröffentlichungstag der Anmeldung: 24.11.1999
(73) Patentinhaber: Euromotive Gesellschaft m.b.H., 5282 Ranshofen (AT)
(72) Erfinder: Garnweidner, Peter, 5112 Lamprechtshausen 429a (AT)
(74) Vertreter: Pohlmann, Eckart, Dipl.-Phys.

(56) Entgegenhaltungen:
- EP-A- 0 486 058
- DE-A- 1 933 852
- DE-A- 2 127 258
- DE-A- 2 129 526
- DE-A- 2 131 837
- DE-A- 2 312 721
- DE-A- 2 336 929
- US-A- 3 754 784

## Beschreibung

Die Erfindung betrifft einen Stoßfänger für ein Fahrzeug nach dem Gattungsbegriff des Patentanspruchs 1. Ein derartiger Stoßfänger ist aus der DE 21 29 526 A bekannt und weist einen biegesteif ausgeführten Stoßfängerträger auf, der über Federn am Fahrzeug angebracht ist, während die energieabsorbierenden Bauelemente von derartigen Halterungsaufgaben frei sind.

Aus der DE 21 31 837 A ist ein weiterer Stoßfänger bekannt, bei dem ein biegefester Stoßfängerträger in Form eines Pufferstangenrohres vorgesehen ist, der über elastische Dämpfungselemenete mit den energieabsorbierenden Bauelementen verbunden ist, die am Fahrzeuglängsträger angebracht sind. Diese zusätzlichen elastischen Dämpfungselemente bilden nachgiebige Querentlastungselemente, über die Querkräfte aufgenommen werden sollen.

Aus der DE 23 36 929 A ist es gleichfalls bekannt, bei einem Stoßfänger Stoßdämpfer vorzusehen, die schräg zur Fahrzeuglängsachse unter einem Winkel jeweils nach außen angeordnet sind.

Die DE 21 29 258 A beschreibt eine Stoßstangenordnung, bei der eine möglichst lange Stoßstange vorgesehen ist, die von Stoßdämpfern abgestützt ist. Diese Stoßdämpfer, die an ihren beiden Befestigungspunkten gelenkig angebracht sind, sind in Fahrzeugquerrichtung zwischen elastischen Körpern, insbesondere Gummielementen abgestützt. Querentlastungselemente sind dazu vorgesehen, die bei der starren Ausbildung der Stoßstange auftretenden Querkräfte aufzunehmen.

Die derartigen üblichen Stoßfängerträger dienen dazu, einen beispielsweise bei einem Aufprall des Fahrzeuges am Stoßfängerträger liegenden Stoß aufzufangen und die daraus resultierende Stoßenergie an die energieabsorbierenden Bauelemente abzugeben, die die Stoßenergie, beispielsweise durch Verformung, absorbieren.

Ein energieabsorbierendes Element zur Anordnung zwischen dem Stoßfängerträger und dem Rahmen eines Fahrzeuges ist aus der DE 42 38 631 A1 bekannt. Das bekannte energieabsorbierende Bauelement besteht aus einem Außenrohr, das am Rahmen des Fahrzeuges angebracht wird, und einem Innenrohr, das am Stoßfängerträger des Fahrzeuges angebracht wird, wobei das Innen- und das Außenrohr ineinander angeordnet sind und das Außenrohr in Form eines Rohrkonus ausgebildet ist, der sich in Stoßrichtung verjüngt, so dass das Innenrohr bei Anliegen von Stoßenergie durch den Rohrkonus hindurchgeschoben und aufgrund der Verjüngung in Stoßrichtung im Rohrkonus zusammengedrückt wird.

Die jüngsten Bestimmungen hinsichtlich eines Frontalaufpralls eines Fahrzeuges, die eine deformierbare Barriere vorschreiben, machen einen Stoßfängerträger erforderlich, der gut verformbar ist. Der Grund dafür besteht darin, dass eine flächige Auflage des Fahrzeuges genügend Reaktionskräfte in der deformierbaren Barriere hervorrufen soll, damit eine energieabsorbierende Verformung der energieabsorbierenden Bauelemente und der Längsträger stattfinden kann.

Dabei soll sich bei einem anliegenden Stoß zunächst der Stoßfängerträger verbiegen, sollen sich anschließend die energieabsorbierenden Bauelemente verformen, soll dann ein Faltenbeulen der Längsträger auftreten und soll schließlich ein Biegeversagen der Längsträger nahe der Spritzwand erfolgen.

Bei Stoßfängerträgern, die auch bei hohen Verformungen nicht brechen, besteht allerdings ein Problem insofern, als hohe Querkräfte hervorgerufen werden, die die Längsträger nach innen ziehen. Diese Querkräfte können so stark sein, dass beim Längsträger in der Nähe der Spritzwand ein Biegeversagen eintritt, was zu Beginn der Fahrzeugdeformation eine extreme Störung der Energieabsorption der Fahrzeugkonstruktion darstellt. Diese hohen Querkräfte beeinträchtigen insbesondere die Verformung der energieabsorbierenden Elemente und das Faltenbeulen der Längsträger, das heißt die Vorgänge, die zu der größten Energieabsorption in der frühen Phase nach dem Aufprall des Fahrzeuges sorgen.

Da bei einer Verformung des Stoßfängerträgers in erster Linie eine Verkürzung des Stoßfängerträgers in Querrichtung zwischen seinen Auflagen, nämlich zwischen den energieabsorbierenden Bauelementen, auftritt, ist eine bevorzugte Richtung der Querkräfte gegeben.

Die der Erfindung zu Grunde liegende Aufgabe besteht demgemäß darin, den Stoßfänger für ein Fahrzeug der eingangs genannten Art so auszugestalten, dass das Auftreten von Querkräften gemindert, wenn nicht gar vermieden wird.

Diese Aufgabe wird gemäß der Erfindung durch die Ausbildung gelöst, die im Anspruch 1 angegeben ist.

Wenn bei einem am Stoßfängerträger liegenden Stoß sich dieser zwischen den energieabsorbierenden Bauelementen verformt, derart, dass er sich in Querrichtung verkürzt, werden die zwischen dem Stoßfängerträger und den Längsträgern des Fahrzeuges angeordneten energieabsorbierenden Bauelemente in Querrichtung nach innen gezogen, wodurch die Schrägstellung der energieabsorbierenden Bauelemente kompensiert, das heißt aufgehoben wird. Die sich anschließende Verformung der energieabsorbierenden Bauelemente erfolgt dann in einer Position diese Bauelemente parallel zur Längsachse des Fahrzeuges.

Besonders bevorzugte Ausgestaltungen und Weiterbildungen des erfindungsgemäßen Stoßfängers sind Gegenstand der Patentansprüche 2 bis 4.

Im Folgenden wird anhand der zugehörigen Zeichnung ein besonders bevorzugtes Ausführungsbeispiel der Erfindung näher beschrieben. Es zeigen
Fig. 1 eine Draufsicht auf das Ausführungsbeispiel im unbelasteten Zustand,
Fig. 2 eine Draufsicht auf das Ausführungsbeispiel nach der Verformung des Stoßfängerträgers bei einem anliegenden Stoß,
Fig. 3 eine Draufsicht auf das Ausführungsbeispiel nach der Verformung der energieabsorbierenden Elemente,
Fig. 4 die außen liegenden Verschraubungen eines energieabsorbierenden Elementes in einer Querschnittsansicht längs der Linie B-B in Fig. 1 und
Fig. 5 die innen liegenden Verschraubungen eines energieabsorbierenden Bauelementes in einer Querschnittsansicht längs der Linie C-C in Fig. 1.

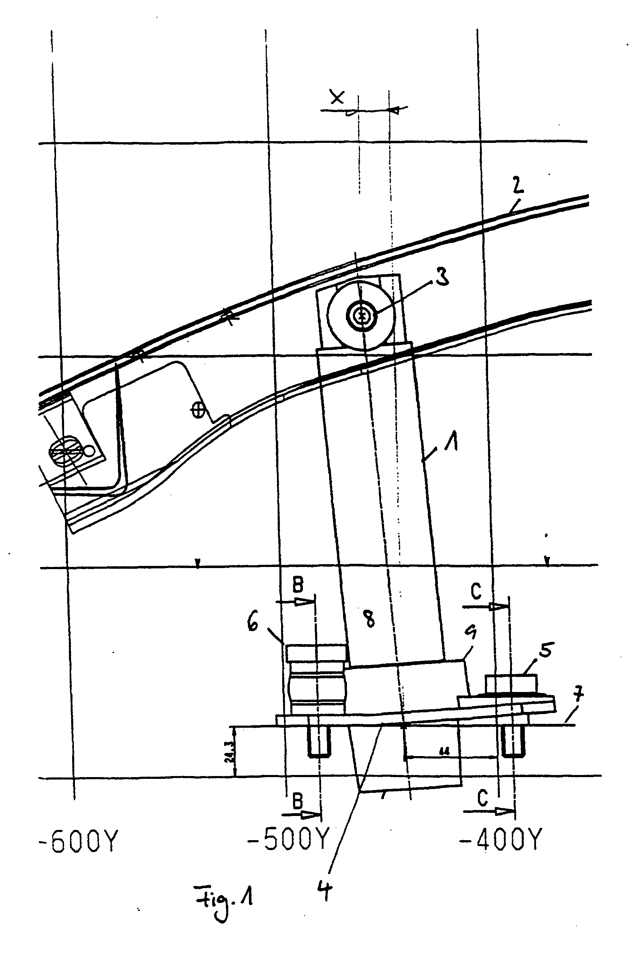

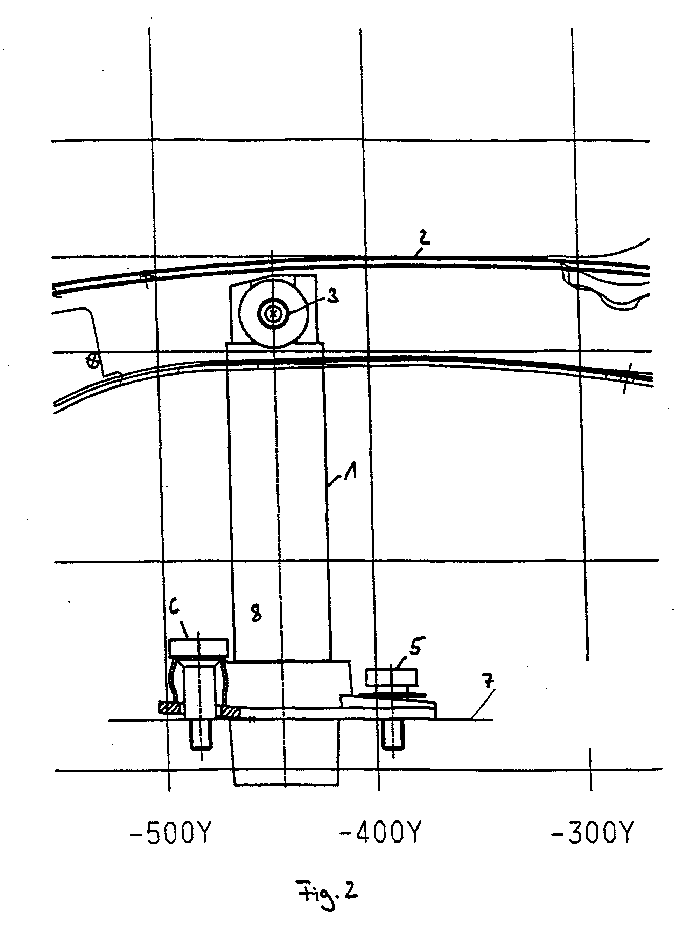

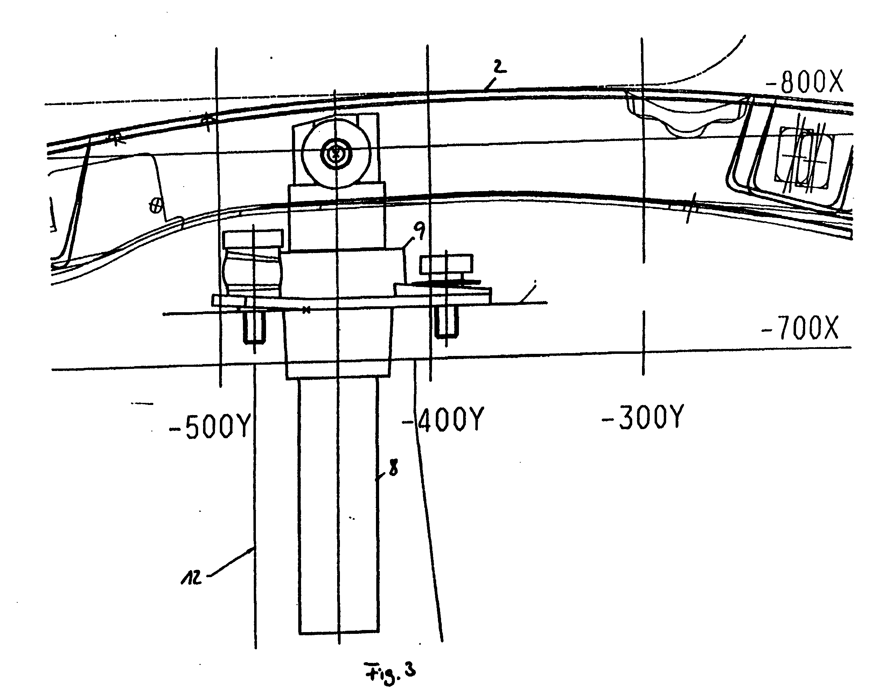

Das in der Zeichnung dargestellte Ausführungsbeispiel eines Stoßfängers für ein Fahrzeug umfaßt einen in Querrichtung des Fahrzeugs verlaufenden Stoßfängerträger 2, an dem bei einem Frontaufprall des Fahrzeuges der dabei entstehende Stoß liegt. Zwei energieabsorbierende Bauelemente 1 sind zwischen dem Stoßfängerträger 2 und Längsträgern 12 (Fig. 3) des Fahrzeuges und in Querrichtung des Fahrzeuges im Abstand voneinander angeordnet. In der Zeichnung ist lediglich ein energieabsorbierendes Bauelement 1 dargestellt.

Wie es in Fig. 1 dargestellt ist, die den Zustand ohne anliegenden Stoß zeigt, sind die energieabsorbierenden Bauelemente 1 unter einem Winkel zur Längsachse des Fahrzeuges schräg nach außen angeordnet. Die Schräganordnung, das heißt der Schrägstellungwinkel, ist so gewählt, daß die Abweichung X der Stelle 3, an der das energieabsorbierende Bauelement 1 mit dem Stoßfängerträger 2 verbunden ist, von der parallel zur Fahrzeuglängsachse verlaufenden Position, etwa der zu erwartenden Verkürzung des Stoßfängerträgers 2 in Querrichtung bei seiner Verbiegung aufgrund eines anliegenden Stoßes entspricht.

Bei dem in der Zeichnung dargestellten Ausführungsbeispiel sind energieabsorbierende Bauelemente 1 vorgesehen, die aus einem konisch in Stoßrichtung sich verjüngenden Außenrohr 9 und einem darin angeordneten Innenrohr 8 bestehen, wobei die Innenabmessungen des Außenrohres 9 derart sind, daß das Innenrohr 8 zusammengedrückt und verformt wird, wenn es aufgrund eines anliegenden Stoßes durch das Außenrohr 9 hindurch gedrückt wird. Die dabei geleistete Verformungsarbeit führt zur Absorption der durch den Stoß übertragenen Stoßenergie.

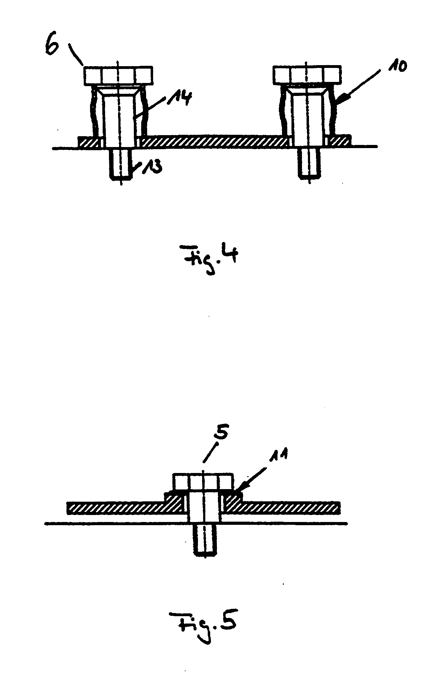

Das Anbindungselement des energieabsorbierenden Bauelementes 1 zum Längsträger 12 ist in Form einer Winkelplatte 4 mit einem rahmenparallen Teil und einem Schrägteil ausgebildet. Der rahmenparallele Teil der Winkelplatte 4 ist in der in Fig. 4 dargestellten Weise über Schrauben 6 mit dem Längsträger 12 verbunden. Der Schrägteil der Winkelplatte 4 ist in der in Fig. 5 dargestellten Weise über eine Schraube 5 mit dem Längsträger verbunden.

Die außen liegenden Schrauben 6 haben einen Gewindebereich 13 und einen sich daran anschließenden Bereich mit größerem Durchmesser 14. Sie sind von einer äußeren Hülse 10 umgeben, wie es in Fig. 4 dargestellt ist. Sie bringen einerseits eine Vorspannung auf und sind andererseits nachgiebig, sobald infolge von Querkräften Kräfte in Richtung der Längsachse der Schraube 6 auftreten. Die Schraube 6 ist gegen den verdickten Bereich 14 angezogen. In der Winkelplatte 4 ist dazu eine Bohrung vorgesehen, die einen Durchmesser hat, der größer als der Durchmesser des Bereiches 14 ist. Die Schraube 6 ist mit ihrem Gewindebereich 13 in den Längsträger 12 geschraubt.

Die innen liegende Verschraubung ist ähnlich wie die außen liegende Verschraubung aufgebaut, sie weist zusätzlich lediglich ein unter dem Kopf der Schraube 5 vorgesehenes Federelement 11 auf, das zum Toleranzausgleich dient.

Der oben beschriebene Stoßfänger für ein Fahrzeug arbeitet bei einem am Stoßfängerträger liegenden Stoß wie folgt:

Durch die anfängliche Verbiegung des Stoßfängerträgers 2 zwischen seinen beiden energieabsorbierenden Bauelementen 1 in Längsrichtung des Fahrzeuges tritt eine Verkürzung des Stoßfängerträgers 2 in Querrichtung auf, so daß dann, wenn das Maß X, um das die Befestigungsstelle 3 der energieabsorbierenden Bauelemente 1 am Stoßfänger 2 von der entsprechenden Stelle bei einer Anordnung parallel zur Fahrzeuglängsachse dieser Vekürzung des Stoßfängerträgers 2 entspricht, die energieabsorbierenden Bauelemente 1 um den Drehpunkt, das heißt die Knicklinie der Winkelplatte 4 kippen, so daß die Verformung des Stoßfängerträgers 2, das heißt seine Verkürzung in Querrichtung, ohne oder nur mit geringer Querkrafteinleitung in die Längsträger 12 möglich wird. Wie es in Fig. 2 dargestellt ist, stellen sich in dieser Weise die energieabsorbierenden Bauelemente 1 rahmenparallel, so daß sie ohne größere Störungen infolge von Querkräften in der gewünschten Weise verformt, beispielsweise bei dem in der Zeichnung dargestellten Ausführungsbeispiel, eingefahren werden können. Der eingefahrene Zustand, das heißt der Zustand nach Verformung der energieabsorbierenden Bauelemente, ist in Fig. 3 dargestellt.

Beim Kippen der energieabsorbierenden Bauelemente 1 wird die Hülse 10 der außen liegenden Schrauben 6 ausgebeult, wie es in Fig. 2 dargestellt ist, so daß der im unbelasteten Zustand rahmenparallel liegende Teil der Winkelplatte 4 nun schräg verläuft, während der im unbelasteten Zustand schräg verlaufende Teil der Winkelplatte 4 rahmenparallel liegt. In diesem Zustand werden die energieabsorbierenden Bauelemente 1 anschließend verformt, indem beispielsweise das Innenrohr 8 durch das Außenrohr 9 hindurchgepreßt wird, wobei aufgrund der konischen Ausbildung des Außenrohres 9 das Innenrohr 8 auf einen geringeren Durchmesser verformt wird. Der Zustand am Ende dieser Verformung der energieabsorbierenden Bauelemente 1 ist in Fig. 3 dargestellt. In Fig. 3 ist erkennbar, daß das Innenrohr 8 durch das konisch verlaufende Außenrohr 9 auf einen geringeren Durchmesser als im unbelasteten Zustand zusammengedrückt worden ist. Die dabei geleistete Verformungsarbeit bewirkt die erwünschte Energieabsorption.

## Patentansprüche

1. Stoßfänger für ein Fahrzeug mit einem in Querrichtung des Fahrzeuges verlaufenden Stoßfängerträger (2) und zwei energieabsorbierenden Bauelementen (1), die zwischen dem Stoßfängerträger (2) und den Längsträgern (12) des Fahrzeuges in Querrichtung des Fahrzeuges im Abstand voneinander und unter einem Winkel zur Längsachse des Fahrzeuges schräg nach außen an den Längsträgern (12) angebracht sind, **dadurch gekennzeichnet, dass** der Stoßfängerträger (2) verformbar ist und die energieabsorbierenden Bauelemente (1) unter einem derartigen Winkel zur Längsachse des Fahrzeuges angebracht sind, dass die Abweichungen (X) der Montagepunkte (3) der energieabsorbierenden Bauelemente (1) am Stoßfängerträger (2) von einer Anordnung der energieabsorbierenden Bauelemente (1) parallel zur Längsachse des Fahrzeuges der bei einer Verformung des Stoßfängerträgers (2) auftretenden Verkürzung des Abstandes der Montagepunkte (3) am Stoßfängerträger (2) in Querrichtung entsprechen.

2. Stoßfänger nach Anspruch 1, **gekennzeichnet durch** ein Anbindungselement der energieabsorbierenden Bauelemente (1) am Längsträger (12) des Fahrzeuges, das in Form einer Winkelplatte (4) ausgebildet ist, deren Knicklinie eine Kippachse bildet, um die die energieabsorbierenden Bauelemente (1) nach innen kippen können.

3. Stoßfänger nach Anspruch 2, **dadurch gekennzeichnet, dass** das Anbindungselement außen und innen mit dem Längsträger (12) des Fahrzeuges verschraubt ist.

4. Stoßfänger nach Anspruch 3, **dadurch gekennzeichnet, dass** die Außenverschraubung aus einer Schraube (6) mit einem Gewindebereich (13) und sich einem daran anschließenden Bereich (14) größeren Durchmessers besteht, um den herum eine Hülse (10) vorgesehen ist und mit dem die Schraube (6) gegen das Anbindungselement angezogen ist.

## Claims

1. Bumper for a vehicle comprising a bumper support (2) extending in the transverse direction of the vehicle and two energy-absorbing components (1) mounted in an outwardly inclined manner on the longitudinal members (12) of the vehicle between the bumper support (2) and the longitudinal members (12) at a distance from one another in the transverse direction of the vehicle and at an angle relative to the longitudinal axis of the vehicle, **characterised in that** the bumper support (2) is deformable and the energy-absorbing components (1) are mounted at such an angle relative to the longitudinal axis of the vehicle that the deviations (X) of the mounting points (3) of the energy-absorbing components (1) on the bumper support (2) from an arrangement of the energy-absorbing components (1) parallel to the longitudinal axis of the vehicle correspond to the reduction in the spacing of the mounting points (3) on the bumper support (2) in the transverse direction upon deformation of the bumper support (2).

2. Bumper according to claim 1, **characterised by** an element for connecting the energy-absorbing components (1) to the longitudinal member (12) of the vehicle in the form of an angle plate (4), the bend of which forms a tilting axis about which the energy-absorbing components (1) can tilt towards the inside.

3. Bumper according to claim 2, **characterised in that** the connecting element is screwed to the longitudinal member (12) of the vehicle on the outside and on the inside.

4. Bumper according to claim 3, **characterised in that** the outer screw joint consists of a screw (6) comprising a threaded region (13) and a subsequent region (14) having a larger diameter, around which a sleeve (10) is provided and by means of which the screw (6) is tightened relative to the connecting element.

## Revendications

1. Pare-chocs pour un véhicule, comprenant un support de pare-chocs (2) qui s'étend dans le sens transversal du véhicule et deux éléments absorbant l'énergie (1), qui sont agencés entre le support de pare-chocs (2) et les longerons (12) du véhicule, dans le sens transversal du véhicule à distance l'un de l'autre et en formant un angle par rapport à l'axe longitudinal du véhicule en oblique vers l'extérieur au niveau des longerons (12), **caractérisé en ce que** le support de pare-chocs (2) est déformable et les éléments absorbant l'énergie (1) sont agencés par rapport à l'axe longitudinal du véhicule en formant un angle tel que les écarts (X) des points de montage (3) des éléments absorbant l'énergie (1) au niveau du support de pare-chocs (2) par rapport à un agencement des éléments absorbant l'énergie (1) parallèle à l'axe longitudinal du véhicule, correspondent au raccourcissement dans le sens transversal de la distance des points de montage (3) au niveau du support de pare-chocs (2), qui se produit lors d'une déformation du support de pare-chocs (2).

2. Pare-chocs selon la revendication 1, **caractérisé en ce qu'**un élément d'assemblage des éléments absorbant l'énergie (1) contre le longeron (12) du véhicule est conçu sous la forme d'une plaque angulaire (4), dont la ligne de flexion forme un axe de basculement autour duquel les éléments absorbant l'énergie (1) peuvent basculer vers l'intérieur.

3. Pare-chocs selon la revendication 2, **caractérisé en ce que** l'élément d'assemblage est vissé à l'extérieur et à l'intérieur contre le longeron (12) du véhicule.

4. Pare-chocs selon la revendication 3, **caractérisé en ce que** l'assemblage vissé extérieur est formé par une vis (6) avec une zone filetée (13) et une zone (14) à plus grand diamètre, adjacente à celle-ci, autour de laquelle est prévue une gaine (10) et par laquelle la vis (6) est serrée contre l'élément d'assemblage.
